# EUROPÄISCHE PATENTSCHRIFT

(11) **EP 2 757 342 B1**
(45) Veröffentlichungstag und Bekanntmachung des Hinweises auf die Patenterteilung: **14.02.2018**
(21) Anmeldenummer: 13193773.2
(22) Anmeldetag: 21.11.2013
(51) Int. Cl.: F28F 27/00, A23L 3/00

(54) **Verfahren und Vorrichtung zur thermischen Behandlung eines Produkts**
Method and device for the thermal treatment of a product
Procédé et dispositif destinés au traitement thermique d'un produit

(30) Priorität: 16.01.2013 DE 102013200610
(43) Veröffentlichungstag der Anmeldung: 23.07.2014
(73) Patentinhaber: Krones AG, 93073 Neutraubling (DE)
(72) Erfinder: Runge, Torsten, 93073 Neutraubling (DE); Justl, Florian, 93073 Neutraubling (DE); Pöschl, Stefan, 93073 Neutraubling (DE); Bobon, Siegfried, 93073 Neutraubling (DE); Frister, Michael, 93073 Neutraubling (DE)
(74) Vertreter: Grünecker Patent- und Rechtsanwälte PartG mbB

(56) Entgegenhaltungen:
- WO-A1-2012/125440
- CH-A- 504 844
- DE-A1- 4 025 570
- DE-T2- 69 311 389
- US-A- 2 197 118

## Beschreibung

Die Erfindung betrifft ein Verfahren zur thermischen Behandlung eines Produktstücke, Produktfasern oder dergleichen enthaltenden im wesentlichen flüssigen Produkts nach dem Oberbegriff des Anspruchs 1 und wie bekannt aus WO 2012/125440 A1 sowie eine Vorrichtung zur erfindungsgemäßen Produktbehandlung.

Für die thermische Behandlung flüssiger Produkte, wie beispielsweise die Kurzzeiterhitzung von Getränken, werden bekanntermaßen Wärmetauscher verwendet. Das Produkt wird hierbei durch einen Primärkreis des Wärmetauschers geleitet und von einen Wärmeaustauschmedium, in der Regel von erhitztem Wasser, das durch einen separaten Sekundärkreis fließt, erwärmt oder gekühlt. Um eine unerwünschte Produktkontamination aus dem Sekundärkreis auch im Falle von Leckagen zuverlässig zu vermeiden, wird ein sogenanntes positives Druckgefälle vom Primärkreis zum Sekundärkreis erzeugt. Dies erfolgt mittels eines Überdrucks im Primärkreis, wobei der Druck am Eingang des Primärkreises dann beispielsweise 4 bar beträgt, der Druck am Ausgang des Primärkreises 3 bar. Der Druck im Vorlauf des Sekundärkreises beträgt beispielsweise 2 bar.

Für die Erzeugung des Überdrucks im Primärkreis sind Armaturen wie beispielsweise Druckhalteventile und Regelventile im Primärkreis bzw. den zugehörigen Produktleitungen nötig. An den Armaturen ist der Leitungsquerschnitt reduziert, wodurch Probleme bei zähflüssigen Produkten und/oder Produkten mit Fasern und/oder Stücken, wie beispielsweise Fruchtstücken, entstehen. In der Folge kann die Produktqualität leiden und/oder das geforderte positive Druckgefälle nicht eingehalten werden.

Die US 2,197,118 A offenbart eine Vorrichtung zum Erhitzen von Milch, wobei in einem Erhitzer zuvor pasteurisierte Milch durch den Sekundärkreis eines Wärmetauschers geleitet und Wärme an durch den Primärkreis des Wärmetauschers geleitete Rohmilch zu deren Vorerwärmung übertragen wird. Der Druck im Primärkreis ist stets geringer als im Sekundärkreis. Dadurch wird verhindert, dass es zu einer Verunreinigung der erhitzten Milch mit der noch nicht ausreichend wärmebehandelten Rohmilch kommen kann.

Die DE 693 11 389 T2 betrifft die Pasteurisierung von Milch in einer Anlagenstufe. Davor geschaltet sind eine Vorwärmstufe und ein Regenerator, durch den das zuvor in der Anlagenstufe pasteurisierte Produkt in einem Sekundärkreis zurückgeleitet wird, um die bereits vorgewärmte Milch in einem Primärkries zu erwärmen. Im Sekundärkreis für die zuvor pasteurisierte Milch wird mit Hilfe eines Überdruckventils ein positiver Druckunterschied zum Primärkreis erzeugt.

Es besteht somit Bedarf für in dieser Hinsicht verbesserte Behandlungsverfahren und Wärmetauscher.

Die gestellte Aufgabe wird mit einem Verfahren nach Anspruch 1 gelöst. Demnach wird das Produkt durch einen Primärkreis eines Wärmetauschers und ein flüssiges Austauschmedium durch einen Sekundärkreislauf des Wärmetauschers unter Einhalten eines positiven Druckgefälles geleitet. Unter einem positiven Druckgefälle ist zu verstehen, dass der Druck im Primärkreis während der Behandlung höher ist als im Sekundärkreis, derart dass das Austauschmedium auch bei einem Leck innerhalb des Wärmetauschers nicht in den Primärkreis übertreten kann. Das positive Druckgefälle wird mit Hilfe eines an den

Rücklauf des Sekundärkreises angelegten Unterdrucks erzeugt. Einbauten, Armaturen oder dergleichen mit Querschnittsreduzierungen im Primärkreis sind dann entbehrlich.

Das Produkt hat eine im makroskopischen Maßstab flüssige Konsistenz und ist beispielsweise eine Flüssigkeit, die auch mit Kohlensäure versetzt sein kann, eine Emulsion, eine Suspension oder dergleichen. Das Produkt enthält Produktstücke oder Faserstücke, wie Fruchtstücke, Fasern oder dergleichen. Das Austauschmedium ist ein Wärmeübertragungsmedium, wie beispielsweise Wasser. Das Austauschmedium ist insbesondere im gesamten Bereich des Wärmetauschers, in dem ein positives Druckgefälle zu gewährleisten ist, nicht bzw. nicht nennenswert kompressibel im Gegensatz zu Gasen, Dämpfen und Mischphasen aus Dämpfen und Kondensaten. Erfindungsgemäß wird das zurück laufende Austauschmedium in einem Unterdruckbehälter gesammelt, wobei der Druck im Unterdruckbehälter derart eingestellt wird, dass im Vorlauf des Sekundärkreises ein Unterdruck herrscht. Das Austauschmedium lässt sich somit unter Unterdruckbedingungen zwischenspeichern. Der Unterdruckbehälter dient dann zur Systemtrennung für das bei Unterdruckbedingungen geführte bzw. gesammelte Austauschmedium gegenüber dem Umgebungsdruck.

Durch den Rücklauf des Sekundärkreises lässt sich im gesamten Wärmetauscher ein positives Druckgefälle vom Primärkreis zum Sekundärkreis bewirken.

Vorzugsweise wird der Unterdruck in Abhängigkeit von einer gemessenen Druckdifferenz zwischen dem Ablauf des Primärkreises und dem Vorlauf des Sekundärkreises eingestellt. In den übrigen Bereichen des Wärmetauschers herrscht dann wenigstens dieses positive Druckgefälle zwischen Primärkreis und Sekundärkreis. Die Druckdifferenz lässt sich auf einfache Weise mittels herkömmlicher Druckmesser und Auswerteeinheiten überwachen.

Vorzugsweise wird im Unterdruckbehälter gesammeltes Austauschmedium gegen den im Unterdruckbehälter herrschenden Druck abgepumpt. Dadurch lässt sich eine Drucksystemtrennung bei kontinuierlichem Betrieb gewährleisten und das zum Zwischenspeichern benötigte Volumen des Unterdruckbehälters minimieren.

Vorzugsweise wird der Füllstand im Unterdruckbehälter überwacht. Die Ablaufpumpe lässt sich in Abhängigkeit von dem Füllstand steuern. Mit wenigstens zwei Füllstandsensoren auf unterschiedlichen Füllniveaus lässt sich verhindern, dass eine maximale Füllmenge des Unterdruckbehälters überschritten und eine minimale Füllmenge unterschritten wird.

Vorzugsweise wird der Durchfluss durch den Vorlauf des Sekundärkreises mittels einer einstellbaren und/oder auswechselbaren Querschnittverengung gezielt reduziert. Dadurch wird der Zustrom in den Vorlauf eingeschränkt. Folglich lässt sich durch Anlegen eines Unterdrucks an den Rücklauf ein geeigneter Druckabfall hinter der Querschnittsverengung erzeugen.

Vorzugsweise herrscht im Auslauf des Primärkreises im Wesentlichen der Umgebungsdruck, und/oder im Einlauf des Primärkreises herrscht ein statischer Druck von höchstens 2 bar. Insbesondere Produkte mit Fasern und/oder Produktstücken lassen sich dann besonders schonend durch den Primärkreis leiten. Das Produkt enthält Produktstücke und/oder Produktfasern. Derartige Produktstücke können beispielsweise ein Volumen von bis zu 2 cm³, insbesondere von bis zu 4 cm³ aufweisen. Die Konsistenz unterschiedlicher Produkte lässt sich beim Durchlaufen des Wärmetauschers somit unverändert beibehalten, insbesondere ohne Produktstücke und/oder Fasern an Einbauten im Primärkreis mechanisch zu schädigen.

Die gestellte Aufgabe wird ferner mit einer Vorrichtung zur thermischen Behandlung eines fließfähigen Produkts nach Anspruch 8 gelöst. Diese umfasst demnach: einen Wärmetauscher, an dem ein Primärkreis für das Produkt und ein Sekundärkreis für ein Austauschmedium ausgebildet ist; Druckmesser zum Vergleich eines auslaufseitigen Drucks des Primärkreises und eines vorlaufseitigen Drucks des Sekundärkreises; und eine mit dem Rücklauf des Sekundärkreises verbundenen Absaugeinheit, mit der sich im Sekundärkreis ein Unterdruck erzeugen lässt. Mit Hilfe der Absaugeinheit und den Druckmessern lässt sich ein gefordertes positives Druckgefälle im Wärmetauscher auch ohne den Querschnitt des Primärkreises verengende Einbauten einstellen.

Ferner umfasst die erfindungsgemäße Vorrichtung einen zwischen die Absaugvorrichtung und den Wärmetauscher geschalteten Unterdruckbehälter zum Zwischenspeichern des Austauschmediums, und ferner eine Pumpe zum Absaugen des Austauschmediums aus dem Unterdruckbehälter. Damit ist ein kontinuierlicher Betrieb bei gleichzeitiger Systemtrennung zwischen einem Unterdruckbereich des Sekundärkreises und einem Ablaufbereich für das Austauschmedium unter Umgebungsdruckbedingungen möglich.

Vorzugsweise umfasst die erfindungsgemäße Vorrichtung ferner ein Regelventil mit einem ersten Eingang, der mit dem Vorlauf des Sekundärkreises verbunden ist, mit einem zweiten Eingang, der mit dem Rücklauf des Sekundärkreises verbunden ist, und mit einem Ausgang, der mit dem Unterdruckbehälter verbunden ist. Bei Bedarf lässt sich das Durchflussverhältnis zwischen dem ersten und zweiten Eingang einstellen und er damit der Anlagenbetrieb anpassen und/oder stabilisieren.

Vorzugsweise umfasst die erfindungsgemäße Vorrichtung ferner ein einstellbares und/oder auswechselbares Reduzierstück, mit dem sich der Zufluss des Austauschmediums in den Vorlauf des Sekundärkreises einschränken lässt. Ein Druckabfall im Sekundärkreis lässt damit auf einfache Weise erzeugen und an einen vorgegebenen Volumenstrom des Austauschmediums anpassen.

Vorzugsweise umfasst die Absaugeinheit eine Wasserstrahlpumpe oder eine Vakuumdüse und ein zuflussseitiges Ventil, mit dem sich die Saugleistung der Absaugvorrichtung einstellen lässt. Die Absaugeinheit kann dann beispielsweise auf einfache Weise durch den Systemdruck im Zulauf des Austauschmediums betrieben werden. Alternativ könnte auch eine einstellbare Vakuumpumpe zum Einsatz kommen, die beispielsweise elektrisch betrieben ist.

Vorzugsweise umfasst die erfindungsgemäße Vorrichtung ferner eine Steuereinheit zum Regeln der Saugleistung der Absaugeinheit in Abhängigkeit von einem Druckvergleich der Druckmesser und/oder einem Ist-Wert des im Unterdruckbehälter herrschenden Drucks. Damit lässt sich der Anlagenbetrieb kontinuierlich anpassen oder optimieren. Ferner kann die Steuereinheit zum Ausgeben eines Alarms, einer Warnmeldung oder dergleichen bei Unterschreiten eines vorgegebenen positiven Druckabfalls im Wärmetauscher und/oder bei einer unzulässigen Niveauabweichung des Füllstands im Unterdruckdruckbehälter ausgebildet sein. Die Zuverlässigkeit eines ordnungsgemäßen Anlagenbetriebs lässt sich dadurch weiter erhöhen.

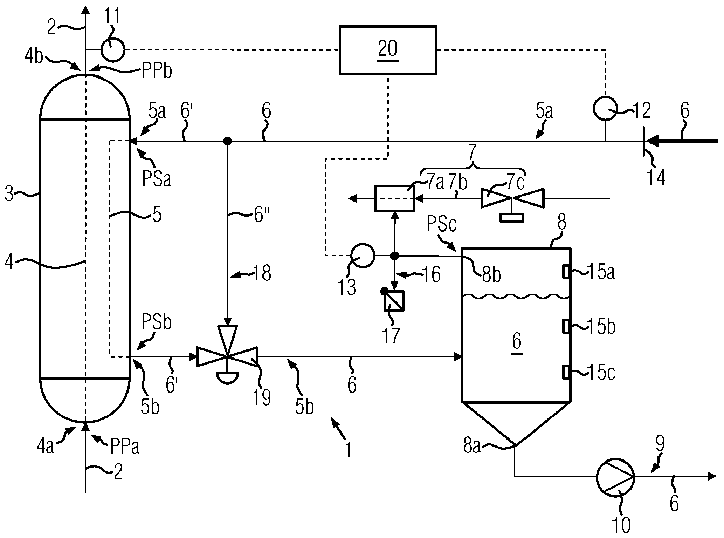

Eine bevorzugte Ausführungsform der erfindungsgemäßen Vorrichtung zur thermischen Behandlung ist in der Zeichnung dargestellt. Die einzige Abbildung zeigt ein Fließschema des zu behandelnden Produkts und eines Wärmeaustauschmediums durch eine erfindungsgemäße thermische Behandlungsanlage.

Demnach umfasst eine bevorzugte Ausführungsform der Vorrichtung 1 zum thermischen Behandeln eines Produkts 2 einen Wärmetauscher 3 mit einem das Produkt 2 führenden Primärkreis 4 und einem Sekundärkreis 5, durch den ein thermisches Austauschmedium 6, wie beispielsweise erhitztes Wasser, geleitet wird. Der Primärkreis 4 des Wärmetauschers 3 hat einen Zulauf 4a und einen Ablauf 4b. Der Sekundärkreis hat einen Vorlauf 5a und einen Rücklauf 5b.

Die Vorrichtung 1 umfasst ferner eine Absaugeinheit 7, die auf den Rücklauf 5b des Sekundärkreislaufs 5 einwirkt, um an diesen einen Unterdruck anzulegen, nachfolgend Rücklaufdruck PSb genannt. Vorzugsweise ist die Absaugeinheit 7 über einen Unterdruckbehälter 8 an den Rücklauf 5b angeschlossen. Im Unterdruckbehälter 8 herrscht ebenfalls ein Unterdruck, nachfolgend Absaugdruck PSc genannt, der zumindest nicht größer ist als der Rücklaufdruck PSb. Im Unterdruckbehälter 8 wird zurück laufendes Austauschmedium 6 gesammelt und zwischengespeichert. Der Unterdruckbehälter 8 dient der Systemtrennung zu einer im Wesentlichen unter Umgebungsdruck stehenden Ablaufleitung 9 für das Austauschmedium 6. Um dieses gegen den Absaugdruck PSc aus dem Unterdruckbehälter 8 zu fördern, ist eine Ablaufpumpe 10 an einen unteren Ausgang 8a des Unterdruckbehälters 8 angeschlossen.

Die Absaugeinheit 7 umfasst beispielsweise eine Wasserstrahlpumpe oder eine Vakuumdüse 7a mit einer von Wasser durchströmten Leitung 7b zum Erzeugen eines Vakuums und mit einem ersten Regelventil 7c zum Einstellen des Durchflusses durch die Leitung 7b. Mit dem ersten Regelventil 7c lässt sich die auf einen oberen Ausgang 8b des Unterdruckbehälters 8 einwirkende Saugleistung der Absaugeinheit 7 steuern. Alternativ könnte die Absaugeinheit 7 auch eine elektrisch oder pneumatisch betriebene Vakuumpumpe oder dergleichen mit entsprechend einstellbarer Saugleistung sein. Am Ablauf 4b des Primärkreises 4 und am Vorlauf 5a des Sekundärkreises sind Druckmesser 11, 12 vorhanden, um eine Ist-Druckdifferenz ΔP zwischen dem Primärkreis 4 und dem Sekundärkreis 5 zu ermitteln. Durch eine entsprechende Softwaresteuerung kann damit auch auf ein positives oder negatives Druckgefälle entsprechend reagiert werden. In dem Bereich des Wärmetauschers 3 kann damit ein, mindestens diesem Differenzwert ΔP entsprechendes positives Druckgefälle, eingestellt und überwacht werden.

Im Bereich zwischen dem oberen Ausgang 8b des Unterdruckbehälters 8 und der Absaugeinheit 7 ist vorzugsweise ein optionaler Druckmesser 13 vorhanden, mit dem der von der Absaugeinheit 7 erzeugte Absaugdruck PSc gemessen werden kann. Auf diese Weise lässt sich die Saugleistung besonders feinfühlig regeln bzw. überwachen.

Im Bereich des Druckmessers 12 für den Vorlauf 5a des Sekundärkreises 5 ist ein den Leitungsquerschnitt verringerndes Reduzierstück 14, wie beispielsweise eine Lochblende, ein entsprechendes Ventil oder dergleichen ausgebildet. Das Reduzierstück 14 ist vorzugsweise austauschbar, um dessen Strömungswiderstand und damit einen Bereich des hinter dem Reduzierstück 14 im Vorlauf 5a verursachten Druckabfalls einstellen zu können.

Am Unterdruckbehälter 8 ist vorzugsweise wenigstens eine Niveausonde 15a, 15b, 15c ausgebildet, um den Füllstand FS des Austauschmediums 6 zu messen. Es kann dann beispielsweise ein Mindestfüllstand zur Drucksystemtrennung gegen die Ablaufleitung 9 eingehalten werden und überschüssiges Austauschmedium 6 beispielsweise bei Erreichen eine Höchstfüllstands bis zu einem geeigneten Restfüllstand des Austauschmediums 6 abgepumpt werden.

An den oberen Ausgang 8b des Unterdruckbehälters 8 ist vorzugsweise eine Überlaufleitung 16 mit einem Rückschlagventil 17 angeschlossen, um bei Normalbetrieb einen Druckausgleich mit der Umgebungsluft zu vermeiden und bei Bedarf ein Spülen des Druckbehälters 8 durch das Rückschlagventil 17 zu ermöglichen.

Zwischen dem Vorlauf 5a und dem Rücklauf 5b des Sekundärkreises 5 ist vorzugsweise eine Überbrückungsleitung 18 mit einstellbarem Durchfluss ausgebildet. Der durch den Wärmetauscher 3 fließende Anteil 6' des Austauschmediums 6 und der durch die Überbrückungsleitung 18 fließende Anteil 6" des Austauschmediums 6 sind dann vorzugsweise mit einem zweiten Regelventil 19 einstellbar. Die im Wärmetauscher 3 ausgetauschte Wärmemenge und das positive Druckgefälle zwischen dem Primärkreis 4 und dem Sekundärkreis 5 lassen sich dann beispielsweise mit Hilfe des ersten und zweiten Regelventils 7c, 19 regeln. Dies ermöglicht einen sowohl flexiblen als auch stabilen Anlagenbetrieb.

Zur Auswertung von Ist-Messwerten der Druckmesser 11, 12, 13 ist eine Auswerteeinheit 20 vorhanden. Diese dient dann vorzugsweise auch der Steuerung/Regelung des ersten Regelventils 7c, des zweiten Regelventils 19 und der Ablaufpumpe 10 und/oder der Füllstandsüberwachung des Druckbehälters 8. Ebenso kann die Auswerteeinheit 20 zur Ausgabe geeigneter Fehlermeldungen, Alarmsignale oder dergleichen bei unzulässigen Abweichungen von vorgegebenen Druckwerten und/oder Füllständen ausgebildet sein.

Das durch den Primärkreis 4 zu leitende Produkt 2 ist beispielsweise ein Fruchtstücke, Fasern oder dergleichen enthaltendes Lebensmittel, insbesondere ein Getränk. Es versteht sich von selbst, dass auch dünnflüssige Produkte oder Produkte mit homogener Konsistenz mit der erfindungsgemäßen Vorrichtung 1 behandelt werden können. Somit ist ein besonders flexibler Anlagenbetrieb mit Produkten 2 unterschiedlicher Konsistenz und Fließeigenschaften möglich.

Der Einlaufdruck PPa des Primärkreises 4 beträgt nicht mehr als 2 bar, insbesondere nicht mehr als 1,5 bar. Der Auslaufdruck PPb des Primärkreises 4 beträgt nicht mehr als 1,5 bar und entspricht vorzugsweise im Wesentlichen dem Umgebungsdruck. Die Druckdifferenz ΔP zwischen dem Vorlaufdruck PSa des Sekundärkreises 5 und dem Auslaufdruck PPb des Primärkreises 4 beträgt wenigstens 0,5 bar, vorzugsweise wenigstens 1 bar.

Das erfindungsgemäße Verfahren lässt sich beispielsweise wie folgt durchführen:
In Abhängigkeit von einer vorgegebenen Durchflussrate des Austauschmediums 6 durch den Sekundärkreis 5 wird beispielsweise ein geeignetes Reduzierstück 14 eingebaut. Die Saugleistung der Absaugeinheit 7 wird derart eingestellt, dass das Austauschmedium 6 mit einem Unterdruck durch den Sekundärkreis 5 gefördert wird und dabei ein gefordertes positives Mindestdruckgefälle vom Primärkreis 4 zum Sekundärkreis 5 eingehalten wird.

Während das Produkt 2 durch den Primärkreis 4 geleitet wird, werden Ist-Werte mit den Druckmessern 11, 12 kontinuierlich überwacht. Sinkt der Ist-Wert der ermittelten Druckdifferenz ΔP unter einen vorgegebenen Schwellenwert, kann beispielsweise die Saugleistung der Absaugeinheit 7 erhöht werden. Zur Anpassung des Wärmeaustauschs kann das Verhältnis der Durchflussanteile 6', 6" des Austauschmediums 6 mit Hilfe des zweiten Regelventils 19 eingestellt werden. Der Füllstand FS des Unterdruckbehälters 8 kann mit der Ablaufpumpe 10 innerhalb eines geeigneten Niveaubereichs gehalten werden. Bei festgestellten Abweichungen gemessener Druckwerte und/oder Füllstände von zulässigen Wertebereichen können Fehlermeldungen, Warnsignale oder dergleichen mit Hilfe der Auswerteeinheit 20 ausgegeben werden.

## Patentansprüche

1. Verfahren zur thermischen Behandlung eines im Wesentlichen flüssigen Produkts (2), bei dem das Produkt durch einen Primärkreis (4) eines Wärmetauschers (3) und ein flüssiges Austauschmedium (6) durch einen Sekundärkreislauf (5) des Wärmetauschers unter Einhalten eines positiven Druckgefälles geleitet werden, wobei
das positive Druckgefälle mit Hilfe eines an den Rücklauf (5b) des Sekundärkreises angelegten Unterdrucks (PSb) erzeugt wird, das Produkt (2) Produktstücke, Produktfasern oder dergleichen enthält und das Austauschmedium (6) ein Wärmeübertragungsmedium, insbesondere Wasser, ist, **dadurch gekennzeichnet, dass** das zurück laufende Austauschmedium (6) in einem Unterdruckbehälter (8) gesammelt wird, wobei der Druck (PSc) im Unterdruckbehälter (8) derart eingestellt wird, dass im Vorlauf (5a) des Sekundärkreises (5) ein Unterdruck (PSa) herrscht.

2. Verfahren nach Anspruch 1, wobei der Unterdruck (PSb) in Abhängigkeit von einer gemessenen Druckdifferenz (ΔP) zwischen dem Ablauf (4b) des Primärkreises (4) und dem Vorlauf (5a) des Sekundärkreises (5) eingestellt wird.

3. Verfahren nach Anspruch 1 oder 2, wobei im Unterdruckbehälter (8) gesammeltes Austauschmedium (6) gegen den im Unterdruckbehälter herrschenden Druck (PSc) abgepumpt wird.

4. Verfahren nach einem der Ansprüche 1 bis 3, wobei wenigstens ein Füllstand (FS) im Unterdruckbehälter (8) überwacht wird.

5. Verfahren nach wenigstens einem der vorigen Ansprüche, wobei der Durchfluss durch den Vorlauf (5a) mittels einer einstellbaren und/oder auswechselbaren Querschnittverengung (14) gezielt reduziert wird.

6. Verfahren nach wenigstens einem der vorigen Ansprüche, wobei im Ablauf (4b) des Primärkreises (4) im Wesentlichen der Umgebungsdruck und/oder im Einlauf (4a) des Primärkreises (4) ein statischer Druck von höchstens 2 bar herrscht.

7. Vorrichtung zur thermischen Behandlung eines fließfähigen Produkts (2), welches Produktstücke , Produktfasern oder dergleichen enthält, mit:
- einem Wärmetauscher (3), an dem ein Primärkreis (4) für das Produkt und ein Sekundärkreis (5) für ein flüssiges Austauschmedium (6) ausgebildet ist;
- Druckmessern (11, 12) zum Vergleich eines auslaufseitigen Drucks (PPb) des Primärkreises und eines vorlaufseitigen Drucks (PSa) des Sekundärkreises; und
- einer mit dem Rücklauf (5b) des Sekundärkreises verbundenen Absaugeinheit (7), mit der sich im Sekundärkreis ein Unterdruck erzeugen lässt, gegengezeichnet durch
- einen zwischen die Absaugvorrichtung (7) und den Wärmetauscher (3) geschalteten Unterdruckbehälter (8) zum Zwischenspeichern des Austauschmediums (6), und ferner
- eine Pumpe (10) zum Absaugen des Austauschmediums aus dem Unterdruckbehälter.

8. Vorrichtung nach Anspruch 7, ferner umfassend ein Regelventil (19) mit einem ersten Eingang, der mit dem Vorlauf (5a) des Sekundärkreises (5) verbunden ist, mit einem zweiten Eingang, der mit dem Rücklauf (5b) des Sekundärkreises (5) verbunden ist, und mit einem Ausgang, der mit dem Unterdruckbehälter (8) verbunden ist.

9. Vorrichtung nach einem der Ansprüche 7 oder 8, ferner mit einem einstellbaren und/oder auswechselbaren Reduzierstück (14), mit dem sich der Zufluss des Austauschmediums (6) in den Vorlauf (5a) des Sekundärkreises (5) einschränken lässt.

10. Vorrichtung nach einem der Ansprüche 7 bis 9, wobei die Absaugeinheit (7) eine Wasserstrahlpumpe oder eine Vakuumdüse (7a) und ein zuflussseitiges Ventil (7c) umfasst, mit dem sich die Saugleistung der Absaugvorrichtung einstellen lässt.

11. Vorrichtung nach einem der Ansprüche 7 bis 10, ferner mit einer Steuereinheit (20) zum Regeln der Saugleistung der Absaugeinheit (7) in Abhängigkeit von einem Druckvergleich der Druckmesser (11, 12) und/oder einem Ist-Wert des im Unterdruckbehälter (8) herrschenden Drucks (PSc).

## Claims

1. A method for the thermal treatment, particularly flash pasteurization, of a substantially liquid product (2), in which the product is passed through a primary circuit (4) of a heat exchanger (3) and a liquid exchange medium (6) through a secondary circuit (5) of the heat exchanger while observing a positive pressure gradient, wherein the positive pressure gradient is produced with the help of a negative pressure (PSb) applied to the return line (5b) of the secondary circuit, wherein the product (2) contains product pieces, fiber pieces, or the like, and wherein the exchange medium is a heat transfer medium, in particular water, **characterized in that** the returning exchange-medium (6) is collected in a vacuum tank (8), wherein the pressure (PSc) is adjusted in the vacuum tank (8) such that a negative pressure (PSa) prevails in the feed line (5a) of the secondary circuit (5).

2. The method according to claim 1, wherein the negative pressure (PSb) is adjusted in response to a measured pressure difference (ΔP) between the outlet (4b) of the primary circuit (4) and the feed line (5a) of the secondary circuit (5).

3. The method according to claim 1 or 2, wherein exchange medium (6) collected in the vacuum tank (6) is pumped off against the pressure (PSc) prevailing in the vacuum tank.

4. The method according to any one of claims 1 to 3, wherein at least one fill level (FS) is monitored in the vacuum tank (8).

5. The method according to at least one of the preceding claims, wherein the flow through the feed line (5a) is reduced in a targeted manner by means of an adjustable and/or exchangeable cross-sectional restriction (14).

6. The method according to at least one of the preceding claims, wherein in the outlet (4b) of the primary circuit (4) substantially the ambient pressure and/or in the inlet (4a) of the primary circuit (4) a static pressure of not more than 2 bar is prevailing.

7. An apparatus for the thermal treatment of a pourable product (2) containing product pieces, fiber pieces, or the like, comprising:
- a heat exchanger (3) on which a primary circuit (4) is formed for the product and a secondary circuit (5) for an exchange medium (6);
- manometers (11, 12) for comparing an outlet side pressure (PPb) of the primary circuit and a feed side pressure (PSa) of the secondary circuit; and
- a suction unit (7) which is connected to the return line (5b) of the secondary circuit and with which a negative pressure can be produced in the secondary circuit, **characterized by** a vacuum tank (8) interposed between the suction device (7) and the heat exchanger (3) for temporarily storing the exchange medium (6), and a pump (10) for sucking the exchange medium out of the vacuum tank.

8. The apparatus according to claim 7, further comprising a control valve (19) with a first inlet connected to the feed line (5a) of the secondary circuit (5), a second inlet connected to the return line (5b) of the secondary circuit (5), and an outlet connected to the vacuum tank (8).

9. The apparatus according to any one of claims 7 or 8, further comprising an adjustable and/or exchangeable reducer (14) with which the inflow of the exchange medium (6) into the feed line (5a) of the secondary circuit (5) can be restricted.

10. The apparatus according to any one of claims 7 to 9, wherein the suction unit (7) comprises a water jet pump or a vacuum nozzle (7a) and an inflow side valve (7c) with which the suction power of the suction device can be adjusted.

11. The apparatus according to any one of claims 7 to 10, further comprising a control unit (20) for controlling the suction power of the suction unit (7) in response to a pressure comparison of the manometers (11, 12) and/or an actual value of the pressure (PSc) prevailing in the vacuum tank (8).

## Revendications

1. Procédé pour le traitement thermique d'un produit (2) essentiellement liquide, d'après lequel le produit est envoyé à travers un circuit primaire (4) d'un échangeur de chaleur (3) et un fluide d'échange (6) liquide est envoyé à travers un circuit secondaire (5) de l'échangeur de chaleur, en respectant une chute de pression positive, procédé d'après lequel la chute de pression positive est engendrée à l'aide d'une dépression (PSb) appliquée au retour (5b) du circuit secondaire, le produit (2) renferme des morceaux de produit, des fibres de produit ou similaires, et le fluide d'échange (6) est un fluide de transmission de chaleur, notamment de l'eau,
**caractérisé en ce que** le fluide d'échange (6) circulant en retour est collecté dans un réservoir de dépression (8), la pression (PSc) dans le réservoir de dépression (8) étant réglée de manière à ce qu'il règne une dépression (PSa) dans l'entrée d'écoulement (5a) du circuit secondaire (5).

2. Procédé selon la revendication 1, d'après lequel la dépression (PSb) est réglée en fonction d'une différence de pression (ΔP) mesurée entre la sortie d'écoulement (4b) du circuit primaire (4) et l'entrée d'écoulement (5a) du circuit secondaire (5).

3. Procédé selon la revendication 1 ou la revendication 2, d'après lequel du fluide d'échange (6) collecté dans le réservoir de dépression (8) est évacué par pompage à l'encontre de la pression (PSc) régnant dans le réservoir de dépression.

4. Procédé selon l'une des revendications 1 à 3, d'après lequel on surveille au moins un niveau de remplissage (FS) dans le réservoir de dépression (8).

5. Procédé selon l'une au moins des revendications précédentes, d'après lequel le débit à travers l'entrée d'écoulement (5a) est réduit de manière ciblée au moyen d'un réducteur de section (14) réglable et/ou interchangeable.

6. Procédé selon l'une au moins des revendications précédentes, d'après lequel dans la sortie d'écoulement (4b) du circuit primaire (4), règne sensiblement la pression ambiante environnante et/ou dans l'entrée d'écoulement (4a) du circuit primaire (4) règne une pression statique d'au plus 2 bar.

7. Dispositif pour le traitement thermique d'un produit (2) susceptible de s'écouler, qui renferme des morceaux de produit, des fibres de produit ou similaires, comprenant :
- un échangeur de chaleur (3) dans lequel est formé un circuit primaire (4) pour le produit, et un circuit secondaire (5) pour un fluide d'échange (6) liquide ;
- des manomètres (11, 12) pour assurer une comparaison d'une pression (PPb) du côté sortie d'écoulement du circuit primaire, et d'une pression (PSa) du côté de l'entrée d'écoulement du circuit secondaire ; et
- une unité d'aspiration (7) reliée au retour (5b) du circuit secondaire, permettant de créer une dépression dans le circuit secondaire,
**caractérisé par**
- un réservoir de dépression (8) monté entre le dispositif d'aspiration (7) et l'échangeur de chaleur (3), pour le stockage intermédiaire du fluide d'échange (6), et par ailleurs
- une pompe (10) pour aspirer le fluide d'échange hors du réservoir de dépression.

8. Dispositif selon la revendication 7, comprenant par ailleurs une vanne de régulation (19) comportant une première entrée qui est reliée à l'entrée d'écoulement (5a) du circuit secondaire (5), une deuxième entrée qui est reliée au retour (5b) du circuit secondaire (5), et une sortie qui est reliée au réservoir de dépression (8).

9. Dispositif selon l'une des revendications 7 ou 8, comprenant par ailleurs une pièce formant réducteur (14) réglable et/ou interchangeable, à l'aide de laquelle il est possible de limiter l'alimentation en fluide d'échange (6) vers l'entrée d'écoulement (5a) du circuit secondaire (5).

10. Dispositif selon l'une des revendications 7 à 9, dans lequel l'unité d'aspiration (7) comprend une pompe du type éjecteur à eau ou une buse à vide (7a) et une vanne (7c) du côté de l'entrée d'écoulement, à l'aide de laquelle peut être réglée la puissance d'aspiration du dispositif d'aspiration.

11. Dispositif selon l'une des revendications 7 à 10, comprenant par ailleurs une unité de commande (20) pour réguler la puissance d'aspiration de l'unité d'aspiration (7) en fonction d'une comparaison de pression des manomètres (11, 12) et/ou d'une valeur réelle instantanée de la pression (PSc) régnant dans le réservoir de dépression (8).
